(19) **Europäisches Patentamt**
**European Patent Office**
**Office européen des brevets**

(11) **EP 1 313 780 B2**

(12) **NEW EUROPEAN PATENT SPECIFICATION**

(45) Date of publication and mention
of the opposition decision:
**16.01.2008 Bulletin 2008/03**

(45) Mention of the grant of the patent:
**30.03.2005 Bulletin 2005/13**

(21) Application number: **00955990.7**

(22) Date of filing: **29.08.2000**

(51) Int Cl.:
***C08F 255/00*** (2006.01)

(86) International application number:
**PCT/CA2000/000992**

(87) International publication number:
**WO 2002/018463 (07.03.2002 Gazette 2002/10)**

(54) **HIGH MELT FLOW, HIGHLY-GRAFTED POLYPROPYLENE**

PROPYLENPROPFPOLYMER MIT HOHEM PROPFUNGSGRAD UND MIT HOHEM SCHMELZFLUSS

POLYPROPYLENE EXTREMEMENT COULANT EN FUSION PRESENTANT UN NIVEAU ELEVE DE GREFFE

(84) Designated Contracting States:
**DE FR GB IT**

(43) Date of publication of application:
**28.05.2003 Bulletin 2003/22**

(73) Proprietor: **E.I. du Pont de Nemours and Company Wilmington, DE 19898 (US)**

(72) Inventors:
• **FLARIS, Vicki**
**Tyler, TX 75703 (US)**
• **MITCHELL, David, John**
**Kingston, Ontario K7L 4J1 (CA)**

(74) Representative: **Morf, Jan Stefan**
**Abitz & Partner**
**Patentanwälte**
**Postfach 86 01 09**
**81628 München (DE)**

(56) References cited:
**EP-A- 0 571 882          EP-B- 0 734 401**
**WO-A-99/55744          US-A- 5 001 197**
**US-A- 5 955 547          US-A- 5 998 547**
**US-A- 6 046 279**

• **A. Warth "The Chemistry and Technology of Waxes", 1956, Reinhold Publishing Corp. New York, pp. 445-469**

Remarks:
The file contains technical information submitted after the application was filed and not included in this specification

**Description**

**FIELD OF INVENTION**

This invention relates to producing a polymeric composition to function as "adhesion promoters" for a number of applications. For example, the product of this invention can be dispersed in water and applied as an aqueous coating onto glass fiber. Other uses include improve dyeability and paintability of thermoplastic olefins (TPO). The product is also very effective as the fucntionalized source in formulations used for bonding dissimilar material to polypropylene substrates.

**BACKGROUND OF THE INVENTION**

There are numerous patents on grafting maleic anhydride and other monomers to polyolefins. For example U.S. Pat. No. 4,612, 155 of R.A. Zelonka and C.S. Wong teaches the grafting of unsaturated monomers onto the polyolefins in an extruder.

US Patent No. 3,862,265 and its division No. 4,001,172, both issued to Steinkamp et al, disclose an extrusion reaction of polyolefins to a high level of grafting having melt flow rates (MFR) when measured at 230°C that are claimed to be up to 1000 dg/min but for polypropylene (PP) only up to 71 dg/min. The percent of maleic anhydride grafted to PP is shown to be only up to 0.53% by weight. These patents show that the use of a special reaction zone within an extruder can be chosen to effect intensive mixing of added reactants to a polymer or distribution of the added reactants to a polymer. The process allows not only the polymer to be modified in terms of its rheology but it may also be simultaneously modified by chemical means.

British Patent No. 679,562 shows graft polymerization of polymers when subjected to suitable mechanical mixing through filters or capillary tubes at high, linear velocities.

US Patent No. 3,177,270 and US Patent No. 3,177,269 each discloses the formation of a graft copolymer by adding a.monomer and an initiator. The products are "malaxed" to such a low degree that no degradation takes place.

US Patent No. 3,013,003 shows that degradation in an extruder can be controlled by utilizing a stabilizer.

The patents noted above do not disclose the art of producing a material having a melt flow rate (MFR) above 500 dg/min in an extruder or a material that is pelletizable, or a highly-grafted material. Some of the previous patents state total amounts, not actual grafted amounts of monomer in a polyolefin product.

**SUMMARY OF THE INVENTION**

In yet another aspect the invention provides a method for making a polymer composition comprising a grafted polypropylene polymer having a melt flow rate (MFR) of at least 500 dg/min as measured by ASTM standard E-1238 (190°C, 2160g) and a grafted monomer content of at least 1 weight percent of functionalized polypropylene, which comprises placing in a twin screw extruder, the propylene polymer, maleic anhydride, and peroxide initiator, mixing them in the extruder, while venting volatiles, and extruding the polymer through a die as strands and chopping the strands into pellets, wherein the polypropylene polymer is selected from the group comprising copolymers of propylene with minor amounts of up to 10 weight percent ethylene.

**BRIEF DESCRIPTION OF THE DRAWINGS**

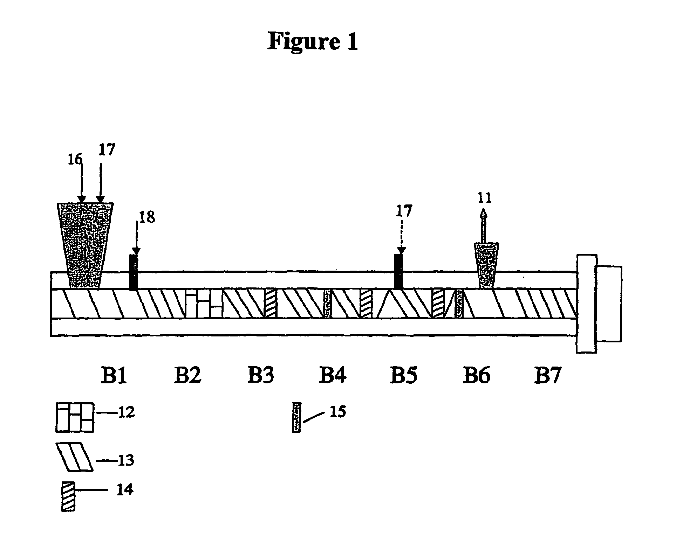

Figure 1 is a schematic view of a reactive extruder used in the process of the invention.

**DETAILED DESCRIPTION OF THE INVENTION**

**Grafting Polyolefin with Grafting Monomer**

The term "grafted polymer" is used herein to describe a polymer formed from copolymers of propylene with minor amounts of ethylene of up to 10 weight percent ethylene as in impact and random copolymers of propylene.

The term "grafting monomer" is used to describe at least one monomer selected from ethylenically unsaturated carboxylic acids and ethylenically unsaturated carboxylic acid anhydrides. Derivatives of such acids, and mixtures thereof may also be used. Examples of the acids and anhydrides are mono-, di- or polycarboxylic acids such as acrylic acids, methacrylic acid, maleic acid, fumaric acid, itatonic acid, crotonic acid, itatonic anhydride, maleic anhydride and substituted maleic anhydride, e.g., dimethyl maleic anhydride or citrotonic anhydride, nadic anhydride, nadic methyl anhydride, and tetrahydrophtahlic anhydride, maleic anhydride being particularly preferred. Examples of the derivatives of the unsaturated acids are salts, amides, imides and esters, e.g., mono- and disodium maleate, acrlyamide, maleimide, glycidyl methacrylate and dimethyl fumarate.

The above mentioned monomers can be grafted onto a polypropylene backbone in the presence of a peroxide initiator in an extruder. The resulting grafted polymer shows appreciable degradation evidenced by an increase in the melt flow rate as compared to the base polymer.

In the process of this invention, polypropylene and peroxide liquid are introduced into the throat of an extruder. Maleic anhydride (MA) is heated above its melting point and injected as a liquid into the barrel I (see Figure 1). For some cases additional peroxide may be fed a second time into the extruder, in liquid form, downstream into the barrel 5.

The preferred peroxide initiator used is Lupersol 101™ (L1101) made by Atochem, containing by weight, 90% 2,5 dimethyl-2, 5 di (tert butyl peroxide) hexane; 4-6% 3,3,6,6 tetramethyl-1, 2 dioxacyclohexane; 2-4% di (tert butyl) peroxide, and 0,1-0,3% 2,2,5,5 tetramethyl droxfuran.

The extruder used for carrying out the grafting process is 43-mm corotating twin screw extruder with 7 heating/ cooling barrels. The length/diameter ratio of this extruder is 38/1. For the most part, the temperature profile for each of the 7 barrels and the final die may be set as follows (°C): 175, 190, 215, 215, 215, 200, 170, and for the die (°C): 180. A vent port is located at barrel 6 drawing a vacuum of at least 200 mm Hg.

A schematic of the screw design is shown in Figure 1. Wide pitch conveying elements (13) are employed initially to move away quickly the base resin from the feeding section (16,17) followed by a kneading block zone (12) (B2) to impart high shear to melt the polymer (16) (B1). Mixing gears (14) are then used to distribute evenly the monomer (16) and the initiator (18) into the melt as the reaction temperature is increased. Blisters (15) and reverse pitch elements are put in place to provide fully filled zones (B3 to B5) with "back-mixing". A blister (15) is used before the vent zone (11) (B6) to provide a melt seal. In the vent zone (B6) wide pitch conveying elements (13) are used to provide maximum surface to volume ratio for effective removal of the unreacted monomer. Narrow pitch conveying elements (13) at the end (B7) provide good pumping for pushing the polymer melt out of the die. Several screw designs with different severity in the reaction zone were used in the following examples which worked equally well in obtaining desired products.

A deep trough with cold water is used to quench the strands after they exit the die. A strand pelletizer was employed to pelletize the solidified strand.

## ANALYTICAL TECHNIQUES

Melt Flow Rate (MFR):

Melt flow rate (MFR) of polypropylene could be measured at 190°C, 2160 g (ASTM 1238E). As the molecular weight of polypropylene is generally reduced significantly during the grafting process, the melt flow rate was measured at the lower temperature of 170°C and the lower weight of 325g. A calibration curve was constructed at the 170°C conditions vs. that at 190°C resulting in the following correlation:

$$MFR(190°C, 2160g) = 844.8 Log_{10}[MFR(170°C, 325\ g)]-715.3$$

This equation was used to convert MER measured at 170°C and 325g to standard ASTM 1238E conditions (190 °C, 2160 g.).

## Percent Grafted Maleic Anhydride by Weight (% MA)

The maleic anhydride (MA) content of the polyolefins could be determined via titration. The polymer sample are placed in a vacuum oven to remove the residual MA, then dissolved in refluxing xylene-butanol mixture where maleic anhydride is converted to a half ester. The solution is titrated hot with a base to the end point to determine the maleic anhydride content.

In the examples, the amount of maleic anhydride grafted to the polypropylene was determined by Fourier Transformed Infrared (FTIR) spectroscopy of films pressed from the sample products. A Bomem MB-100™ FTIR spectrometer was used. The intensity of the grafted-anhydride absorbance band was measured and normalized for film thickness. The graft level was calculated based on the calibration curve of absorbance vs. graft level obtained by titration method as described above.

## EXAMPLES

### Example 1 (outside the invention)

A homopolymer-based polypropylene, designated as grade "A" with MFR of 3.4 dg/min (230°C, 2160 g) was used as the base resin (Table 1- 1 through 5). The extruder configuration was set as described in the detailed description relative to Figure 1. The extruder was first fed with the base resin at 500 g/min. Maleic anhydride was then injected at variable rates of 1.75, 2.6, or 3.5 wt % of the base resin as indicated in Table 1. Finally the peroxide initiator (L101) was added at the rates of 0.5, 1.25, or 2 wt % of that of the base resin. Novel, pelletized polypropylene resin with melt flow rates of above 500 dg/min and a graft level in excess of 1 weight percent was made in each setting. Increasing peroxide feed rate resulted in products with higher melt flow rates and slightly higher graft level. Increasing maleic anhydride level improves the overall graft levels somewhat but adversely affects the graft yield.

In runs 6 through 8, an alternate homopolymer based polypropylene, grade "B" with MFR of 1.2 dg/min. was used. The plus sign "+" indicates a split in the feed. in all these cases, products with MFR above 500 dg/min and graft level in excess of 1 weight percent were obtained.

Table 1

| | Base Polymer | Screw RPM | PP Feed Rate (g/min) | L101 (g/min) | MA (g/min) | MFR (dg/ min) | Grafted MA (wt %) | Graft Yield (%) |
|---|---|---|---|---|---|---|---|---|
| 1 | Grade A | 225 | 500 | 2.50 | 8.75 | 701 | 1.15 | 65.7 |
| 2 | Grade A | 225 | 500 | 2.50 | 17.5 | 593 | 1.35 | 38.6 |
| 3 | Grade A | 275 | 500 | 6.25 | 13.0 | 943 | 1.37 | 52.7 |
| 4 | Grade A | 275 | 500 | 10.0 | 8.75 | 884 | 1.21 | 69.1 |
| 5 | Grade A | 275 | 500 | 11.56 | 17.5 | 1071 | 1.72 | 49.1 |
| 6 | Grade B | 225 | 450 | 2.50 | 8.75 | 810 | 1.09 | 62.3 |
| 7 | Grade B | 225 | 450 | 1.25+1.25 | 8.75 | 759 | 1.11 | 63.4 |
| 8 | Grade B | 225 | 450 | 1.25+1.25 | 4.38+4.38 | 810 | 1.03 | 58.8 |

### Example 2 (outside the invention)

In this example, homopolymer based polypropylene grades with higher initial melt flow rates were used (Grades C, D and E). The MIFR (230°C, 2160 g) for grades C, D and E are 10, 22 and 35 dg/min. respectively. The procedure was essentially the same as that of Example 1.

Table 2

| | Base Polymer | Screw RPM | PP Feed Rate (g/min) | L101 (g/min) | MA (g/min) | MFR (dg/min) | Grafted MA (wt %) | Graft Yield (%) |
|---|---|---|---|---|---|---|---|---|
| 9 | Grade C | 275 | 500 | 10 | 17.5 | 1245 | 2.28 | 65.1 |
| 10 | Grade D | 275 | 500 | 10 | 17.5 | 1370 | 1.95 | 55.7 |
| 11 | Grade E | 375 | 500 | 10 | 17.5 | 1376 | 2.18 | 62.3 |

As shown products made using these alternate, higher flow based PP, grades resulted in considerably higher melt flow rate (over 1200 dg/min) and graft level (about 2 weight percent) as compared to those obtained in Example 1.

### Example 3 (outside the invention)

This example indicates that use of a homopolymer PP, Grade F, with much higher MFR (115 dg/min at 230°C, 2160 g.). Under similar processing conditions (conditions 12-15) as Example 2 but with much higher levels of maleic anhydride fed, the products did not have higher MFR when compared to those of Example 2. Feeding very high level of maleic anhydride also did not result in improved graft levels (below 2 weight percent). In fact, it results in a sharp decline in graft yield (%).

Decreasing the PP feed level to only 151 g/min. with corresponding reductions in peroxide and monomer feed levels resulted in products with similar MFR but substantially higher graft level. Graft levels in excess of 3.5 weight percent (conditions 16,18 and 20) were obtained as well as high graft yield. The improved maleic anhydride content and reaction yield can be contributed to much longer residence time as lower throughput rates and lower screw speeds (rpm) were used. A split feed (*) of peroxide was used to determine its effect on both graft level and MFR (conditions 19 and 20).

Table 3

|  | Base Polymer | Screw RPM | PP Feed Rate (g/min) | L101 (g/min) | MA (g/min) | MFR (dg/min) | Grafted MAH (wt %) | Graft Yield (%) |
|---|---|---|---|---|---|---|---|---|
| 12 | Grade F | 225 | 378 | 6.92 | 26.2 | 1005 | 1.59 | 22.9 |
| 13 | Grade F | 225 | 378 | 7.35 | 31.4 | 1254 | 1.70 | 20.5 |
| 14 | Grade F | 225 | 378 | 13.84 | 31.4 | 791 | 1.55 | 18.7 |
| 15 | Grade F | 225 | 378 | 8.91 | 25.0 | 1000 | 2.02 | 30.5 |
| 16 | Grade F | 175 | 151 | 3.02 | 6.6 | 1283 | 3.86 | 88.3 |
| 17 | Grade F | 175 | 151 | 5.53 | 12.6 | 1063 | 1.93 | 23.1 |
| 18 | Grade F | 175 | 151 | 3.02 | 6.6 | 1307 | 3.51 | 80.3 |
| 19 | Grade F | 175 | 151 | 5.53+3.80* | 12.6 | 1050 | 2.19 | 26.2 |
| 20 | Grade F | 175 | 151 | 5.53+2.85* | 12.6 | 1210 | 4.10 | 49.1 |

## Example 4

This example demonstrates the use of copolymers of ethylene and propylene for both impact and random copolymers when used as the base resin for. this invention. In run 21 using an ethylene(5.7weight percent)-propylene random copolymer (grade G) with similar processing conditions as in previous examples resulted in product having MFR of 897 dg/min and a maleic graft level of 2.3 weight percent. Switching to an alternate random copolymer base resin (grade H, 4weight percent ethylene), MFR of 500 dg/min and above with graft levels in excess of 1 weight percent were obtained (22, 23).

Experiments 24 through 34 were carried out in a longer (48 L/D) corotating twin screw extruder. In all these cases a split peroxide initiator was employed where Lupersol 101™ was fed as a coated master-batch. It appeared that use of liquid peroxide vs. coated master-batch produced similar results (24 vs. 25 and 26 vs. 27). Once again increasing maleic anhydride feed rate results in higher Grafted MA but graft yield decreased (28-30). The MFR appears to increase somewhat as the maleic anhydride feed rate is increased. Increasing the peroxide feed level increase both MFR and graft content (31). As before lowering the PP feed rate, increased further the graft content (32). Finally using a higher ethylene content resin, i.e., Grade I, resulted in similar graft level and somewhat lower MFR as that with slightly lower ethylene content, Grade H, (compare 33, 34 vs. 28,29 respectively).

Table 4

|  | Base Polymer | Screw RPM | PP Feed Rate (g/min) | L101 (g/min) | MA (g/min.) | MFR (dg/ min) | Grafted MA (wt%) | Graft Yield (%) |
|---|---|---|---|---|---|---|---|---|
| 21 | Grade G[1] | 275 | 500 | 11.56 | 17.5 | 897 | 2.3 | 65.7 |
| 22 | Grade H[2] | 225 | 500 | 2.48* | 11.0 | 494 | 1.37 | 62.2 |
| 23 | Grade H | 225 | 400 | 1.60 | 11.0 | 559 | 1.56 | 70.9 |
| 24 | Grade H | 200 | 500 | 1.47*+1.75* | 9.0 | 502 | 1.30 | 72.2 |
| 25 | Grade H | 200 | 500 | 1.47 + 1.75* | 9.0 | 522 | 1.28 | 71.1 |

(continued)

| | Base Polymer | Screw RPM | PP Feed Rate (g/min) | L101 (g/min) | MA (g/min.) | MFR (dg/ min) | Grafted MA (wt%) | Graft Yield (%) |
|---|---|---|---|---|---|---|---|---|
| 26 | Grade H | 200 | 500 | 1.93+ 1.29* | 9.0 | 504 | 1.34 | 74.4 |
| 27 | Grade H | 200 | 500 | 1.93*+1.29* | 9.0 | 534 | 1.43 | 79.4 |
| 28 | Grade H | 190 | 500 | 1.84*+1.38* | 11.0 | 589 | 1.55 | 71.1 |
| 29 | Grade H | 190 | 500 | 1.84*+1.38* | 13.1 | 643 | 1.75 | 66.8 |
| 30 | Grade H | 190 | 500 | 1.84*+1.38* | 15.0 | 611 | 1.85 | 60.3 |
| 31 | Grade H | 190 | 500 | 2.21*+1.66* | 15.0 | 661 | 2.05 | 68.1 |
| 32 | Grade H | 190 | 420 | 2.21*+1.66* | 14.8 | 611 | 2.13 | 56.2 |
| 33 | Grade I[3] | 190 | 500 | 1.93*+1.38* | 11.1 | 530 | 1.67 | 73.9 |
| 34 | Grade I[3] | 190 | 500 | 1.93*+1.38* | 13.4 | 546 | 1.63 | 60.4 |

1- Grade G ethylene-propylene random copolymer (5.7 wt%) with a MFR of 5.0 dg/min.

2&3- Grades H and I are ethylene-propylene random copolymers with 4% and 6% ethylene contents respectively. Both Grades have MFR's of 5.0 dg/min. (230°C, 2160 g).

* In those values designated with (*) Peroxide was coated on pellets and it was fed as a master-batch.

+ Peroxide was added down stream as well as the throat.

## Claims

1. A method for making a polymer composition comprising a grafted polypropylene polymer having a melt flow rate (MFR) of at least 500 dg/min as measured by ASTM standard E-1238 (190°C, 2160 g) and a grafted monomer content of at least 1 weight percent of functionalized polypropylene, wherein the polypropylene polymer is selected from the group comprising copolymers of propylene with minor amounts of up to 10 weight percent ethylene, which comprises placing in a twin screw extruder, the propylene polymer, maleic anhydride, and peroxide initiator mixing them in the extruder, while venting volatiles, and extruding the polymer through a die as strands and chopping the strands into pellets.

## Patentansprüche

1. Verfahren zur Herstellung einer Polymerzusammensetzung mit einem Polypropylen-propfpolymer mit einer Schmelzflussgeschwindigkeit (MFR) von mindestens 500 dg/min, so wie dieselbe mit Hilfe der ASTM Norm E-1238 (190°C, 2160 g) gemessen worden ist, und mit einem Pfropfmonomergehalt von mindestens 1 Gewichtsprozent des funktionalisierten Polypropylens, wobei das Polypropylenpolymer ausgewählt wird aus der Gruppe bestehend aus Copolymeren von Propylen mit untergeordneten Mengen von bis zu 10 Gew.-% Ethylen, wobei das Verfahren sich erstreckt auf das Unterbringen des Propylenpolymers, des Maleinsäureanhydrid und des als Initiierungsmittel dienenden Peroxids in einem Doppelschraubenextruder, auf das Mischen derselben in dem Extruder, während die flüchtigen Bestandteile an die Luft entweichen können, und auf das Extrudieren des Polymers durch eine Düse in der Form von Strängen und auf das Zerhacken der Stränge zu Pellets.

## Revendications

1. Procédé pour la fabrication d'une composition de polymère comprenant un polymère de polypropylène greffé présentant un indice de fluidité (MFR) d'au moins 500 dg/min, tel que mesuré par la norme ASTM E-1238 (190°C, 2160 g), et une teneur en monomère greffé d'au moins 1 pour-cent en poids de polypropylène fonctionnalisé, dans lequel le polymère de polypropylène est choisi dans le groupe comprenant des copolymères de propylène avec des quantités mineures allant jusqu'à 10 pour-cent en poids d'éthylène, qui comprend le placement dans une extrudeuse à vis double du polymère de propylène, de l'anhydride maléique et d'un initiateur peroxyde, leur mélange dans l'extrudeuse, tout en déchargeant les composés volatils, et l'extrusion du polymère à travers une filière sous forme de brins et la coupe des brins en pastilles.

# Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4612 A
- US 155 A
- US 3862265 A
- US 4001172 A, Steinkamp
- GB 679562 A
- US 3177270 A
- US 3177269 A
- US 3013003 A